(19) Europäisches Patentamt
European Patent Office
Office européen des brevets

(11) **EP 3 291 460 B1**

(12) **EUROPEAN PATENT SPECIFICATION**

(45) Date of publication and mention
of the grant of the patent:
**14.08.2019 Bulletin 2019/33**

(51) Int Cl.:
*H04B 7/26* (2006.01)          *H04J 13/00* (2011.01)
*H04B 1/7075* (2011.01)

(21) Application number: **15895953.6**

(86) International application number:
**PCT/CN2015/082364**

(22) Date of filing: **25.06.2015**

(87) International publication number:
**WO 2016/206053 (29.12.2016 Gazette 2016/52)**

(54) **METHOD OF SYNCHRONIZING PHASES AND DEVICE UTILIZING SAME**

VERFAHREN ZUM SYNCHRONISIEREN VON PHASEN UND VORRICHTUNG DAMIT

PROCÉDÉ DE SYNCHRONISATION DE PHASES ET DISPOSITIF L'UTILISANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.03.2018 Bulletin 2018/10**

(73) Proprietor: **Huawei Technologies Co., Ltd.
Longgang District
Shenzhen, Guangdong 518129 (CN)**

(72) Inventors:
• **FANG, Liming
Shenzhen
Guangdong 518129 (CN)**
• **SUI, Meng
Shenzhen
Guangdong 518129 (CN)**

• **ZHANG, Xiaofeng
Shenzhen
Guangdong 518129 (CN)**

(74) Representative: **Pfenning, Meinig & Partner mbB
Patent- und Rechtsanwälte
Theresienhöhe 11a
80339 München (DE)**

(56) References cited:
**EP-A2- 1 075 089          CN-A- 1 164 785
CN-A- 1 246 760          CN-A- 1 267 978
CN-A- 1 315 083          CN-A- 1 373 947
CN-A- 101 127 555        US-A- 5 898 665
US-A1- 2014 086 282      US-B2- 7 936 728**

## Description

### TECHNICAL FIELD

The present invention relates to the field of communications technologies, and in particular, to a method and an apparatus for phase synchronization.

### BACKGROUND

In a CDMA (Code Division Multiple Access; Code Division Multiple Access) system, a transmitting device obtains a spread spectrum signal by performing spread spectrum modulation on a transmit signal by using a code word, and then transmits the spread spectrum signal to a receiving device through a channel. The receiving device despreads the received spread spectrum signal by using the code word. The code word is a bit sequence, and each bit in the code word is a chip. Different code words are orthogonal to each other.

To optimize a signal-to-noise ratio of the signal despread by the receiving device, the CDMA system not only requires that the code word used by the receiving device should be the same as and synchronized with the code word used by the transmitting device, but also requires that a phase of the code word used by the receiving device should be synchronized with that of the received spread spectrum signal. If the phase of the code word used by the receiving device is not synchronized with that of the received spread spectrum signal, crosstalk is generated on the channel between the transmitting device and the receiving device, and therefore the signal-to-noise ratio of the signal despread by the receiving device is reduced.

EP 1075089 A discloses that the received signal 21 after the initial acquisition is multiplied by spreading codes 51 and 52 by the multipliers 47 and 48, the spreading codes being generated by the spreading code replica generator 30, and having phases shifted forward and backward in time by an amount T (less than one chip interval). The two products are passed through bandpass filters (BPF) 53 and 54, and are square-law detected by square-law detectors 55 and 56, in which correlation values are detected. The correlation values are summed in the opposite phase by an adder 57. The sum is passed through a loop filter 58, and becomes a control voltage of the VCCG 29. The clock signal generated by the VCCG 29 regulates the phase of the spreading code replica generator 30, tracks the synchronous point, and maintains the synchronization.

US 2014/0086282 A discloses a method including correlating a code having a first offset with a signal to produce a first correlation result; correlating the code having a second offset with the signal to produce a second correlation result; determining a cost function using the first correlation result and the second correlation result; and adjusting the first offset and the second offset in dependence upon the cost function.

## SUMMARY

The present invention is as defined in the appended independent claims. Embodiments of the present invention provide a method for phase synchronization, so as to implement phase synchronization between a code word used by a receiving device and a received spread spectrum signal, avoid channel crosstalk, and increase a signal-to-noise ratio of a signal despread by the receiving device.

One or more technical solutions provided in the embodiments of the present invention have at least the following technical effects or advantages:
The embodiments of the present invention utilize a feature of a specific code word, namely, a linear relationship between a phase value of the specific code word and an amplitude value of a despread signal obtained by using the specific code word. Therefore, a difference between two phase values of the specific code word may be determined according to a difference between amplitude values of two despread signals. In the embodiments of the present invention, two despread signals with different amplitude values are obtained first; a difference between two phase values of the specific code word is determined according to a difference between the amplitude values of the two despread signals; further, a difference between a phase value of the specific code word and a phase value of a received spread spectrum signal is determined; and finally, synchronization processing is performed by using the difference between the phase value of the specific code word and the phase value of the received spread spectrum signal. In this way, phase synchronization is implemented between a code word used by a receiving device and a received spread spectrum signal, channel crosstalk is avoided, and a signal-to-noise ratio of a signal despread by the receiving device is increased.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and persons of ordinary skill in the art may still derive other drawings from these accompanying drawings without creative efforts.

FIG. 1 is a schematic structural diagram of a wired CDMA system;
FIG. 2 is a schematic diagram of a relationship between an amplitude value of a despread signal obtained by using a specific code word and an offset of a phase value of the specific code word relative to a phase value of a received spread spectrum signal;

FIG. 3 is a flowchart of a method for phase synchronization according to an embodiment of the present invention;

FIG. 4 is a flowchart of a method for eliminating a phase jitter according to an embodiment of the present invention;

FIG. 5 is another flowchart of a method for phase synchronization according to an embodiment of the present invention;

FIG. 6 is a schematic diagram of functional modules of an apparatus for phase synchronization according to an embodiment of the present invention;

FIG. 7 is a schematic structural diagram of hardware of an apparatus for phase synchronization according to an embodiment of the present invention;

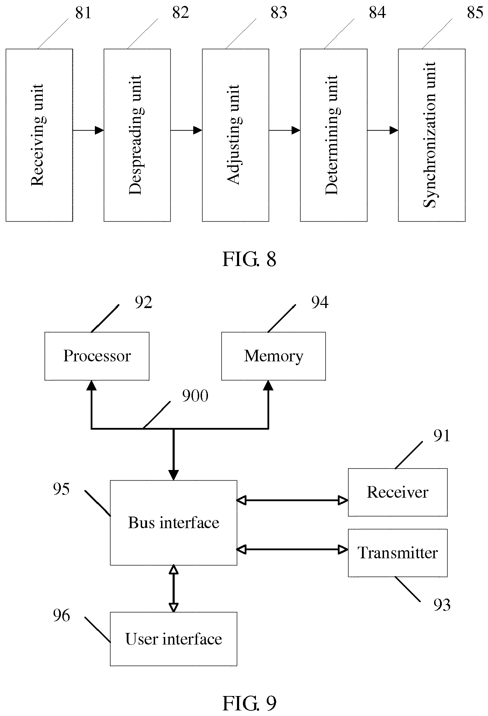

FIG. 8 is another schematic diagram of functional modules of an apparatus for phase synchronization according to an embodiment of the present invention;

FIG. 9 is another schematic structural diagram of hardware of an apparatus for phase synchronization according to an embodiment of the present invention;

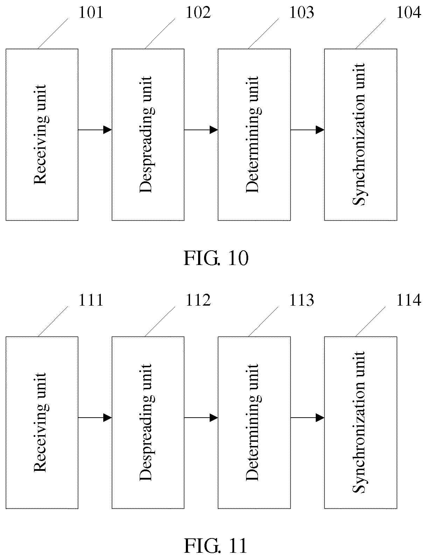

FIG. 10 is another schematic diagram of functional modules of an apparatus for phase synchronization according to an embodiment of the present invention; and

FIG. 11 is another schematic diagram of functional modules of an apparatus for phase synchronization according to an embodiment of the present invention.

**DESCRIPTION OF EMBODIMENTS**

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

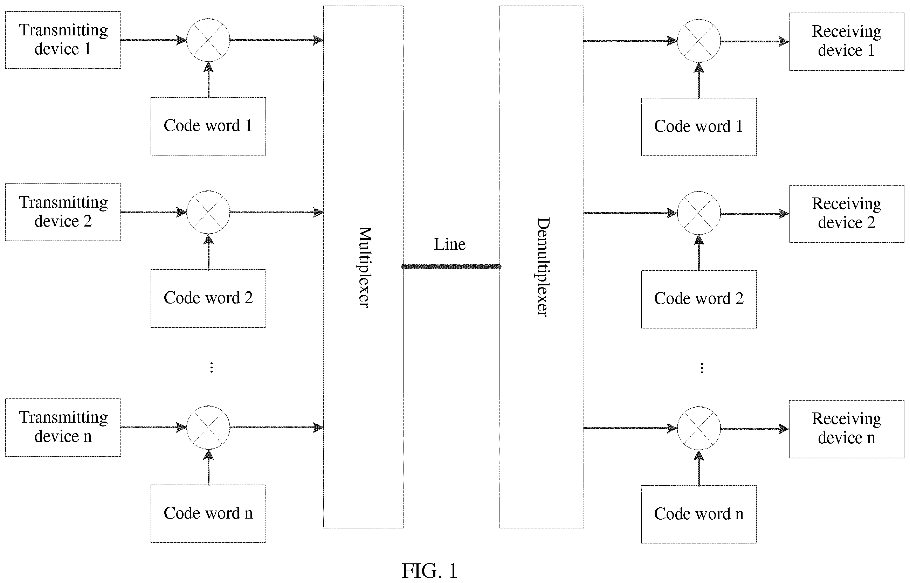

A method for phase synchronization and a method for crosstalk cancellation according to the embodiments of the present invention are applicable to a wired CDMA system. Referring to FIG. 1, FIG. 1 is a schematic structural diagram of a wired CDMA system. The wired CDMA system includes multiple transmitting devices, multiple receiving devices, and cables for connecting multiple transmitting devices to multiple receiving devices. The transmitting devices generally correspond to the receiving devices on a one-to-one basis. As shown in FIG. 1, there are n transmitting devices, and correspondingly there are n receiving devices. In addition, the cables shown in FIG. 1 include n channels: a channel 1 to a channel n. A transmitting device 1 corresponds to a receiving device 1. The transmitting device 1 performs spread spectrum modulation on a transmit signal by using a code word 1, to obtain a spread spectrum signal, and then transmits the spread spectrum signal to the receiving device 1 through the channel 1. The receiving device 1 despreads the received spread spectrum signal by using the code word 1, to obtain a despread signal. Likewise, a transmitting device n corresponds to a receiving device n.

Generally, a code word used by a transmitting device is the same as and synchronized with a code word used by a receiving device, so that a phase of a despread signal obtained by the receiving device is the same as that of a transmit signal of the transmitting device. For example, both the transmitting device 1 and the receiving device 1 use the code word 1, and the code word 1 used by the transmitting device is synchronized with the code word 1 used by the receiving device. However, affected by a cable between the transmitting device and the receiving device, a phase of a spread spectrum signal received by the receiving device is not synchronized with that of the code word used by the receiving device. Consequently, crosstalk is generated on a channel between the transmitting device and the receiving device. The method for phase synchronization and the method for crosstalk cancellation according to the embodiments of the present invention are intended to resolve a technical problem that the spread spectrum signal received by the receiving device is not synchronized with the code word used by the receiving device.

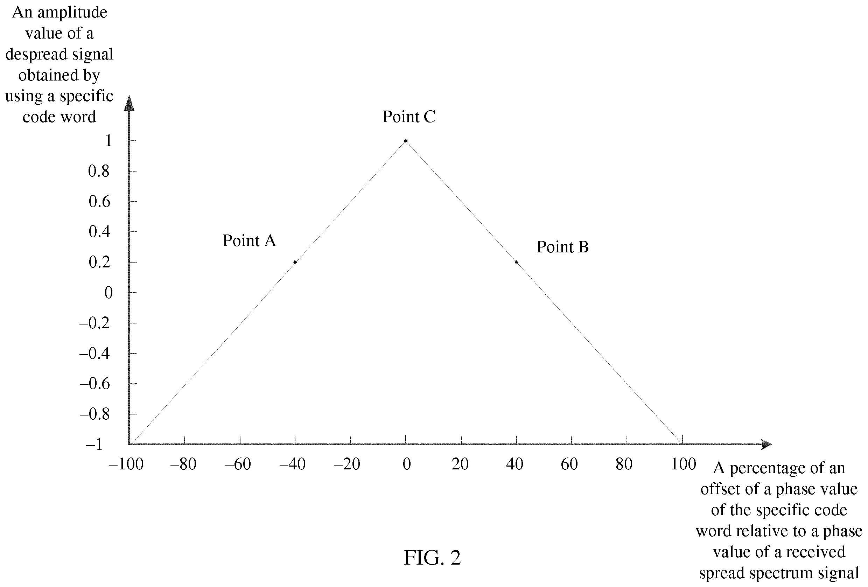

In the CDMA system, there is a specific code word among numerous code words used for spread spectrum modulation and despreading. The specific code word has the following feature: A linear relationship exists between a phase value of the specific code word and an amplitude value of a despread signal obtained by using the specific code word. The linear relationship is specifically as follows: If the phase value of the specific code word is synchronized with a phase value of a received spread spectrum signal, the amplitude value of the despread signal obtained by using the specific code word is maximal. If the phase value of the specific code word has a forward or backward offset relative to the phase value of the received spread spectrum signal, the amplitude value of the despread signal obtained by using the specific code word decreases linearly as the offset increases. Referring to FIG. 2, FIG. 2 is a schematic diagram of a relationship between the amplitude value of the despread signal obtained by using the specific code word and the offset of the phase value of the specific code word relative to the phase value of the received spread spectrum signal.

Because the linear relationship exists between the amplitude value of the despread signal obtained by using the specific code word and the offset of the phase value of the specific code word relative to the phase value of the received spread spectrum signal, the offset of the phase value of the specific code word relative to the phase value of the received spread spectrum signal can be determined according to a difference between amplitudes of despread signals obtained by using the specific code word. Using the schematic diagram of the relationship shown in FIG. 2 as an example, in FIG. 2, coordinates of point C are $(P_t, A_{max})$, indicating that the offset of the phase value of the specific code word relative to the phase value of the received spread spectrum signal is 0, that is, the phase value of the specific code word is synchronized with the phase value of the received spread spectrum signal, the amplitude value of the despread signal obtained by using the specific code word is maximal, and the maximum amplitude value is $A_{max}$. In FIG. 2, there are also point A and point B. Coordinates of point A are $(P_0, A_0)$, indicating that a percentage of the offset of the phase value of the specific code word relative to the phase value of the received spread spectrum signal is $P_0$, and that the amplitude value of the despread signal obtained by using the specific code word is $A_0$. Coordinates of point B are $(P_1, A_1)$, indicating that a percentage of the offset of the phase value of the specific code word relative to the phase value of the received spread spectrum signal is $P_1$, and that the amplitude value of the despread signal obtained by using the specific code word is $A_1$.

If $A_0$ is equal to $A_1$, it indicates that point A and point B are symmetric points in FIG. 2. It is also known that symmetric points in FIG. 2 are all symmetric about point C. Therefore, according to $P_0$ and $P_1$, an absolute difference between the phase value of the specific code word and the phase value of the received spread spectrum signal may be determined as:

(Phase value of the specific code word corresponding to $P_0$ + Phase value of the specific code word corresponding to $P_1$)/2, where a phase value of the specific code word corresponding to $P_0$ is a phase value of the specific code word when the percentage of the offset of the phase value of the specific code word relative to the phase value of the received spread spectrum signal is $P_0$, and a phase value of the specific code word corresponding to $P_1$ is a phase value of the specific code word when the percentage of the offset of the phase value of the specific code word relative to the phase value of the received spread spectrum signal is $P_1$.

If $A_0$ is not equal to $A_1$, it indicates that point A and point B are not mutually symmetric points. In this case, point D needs to be obtained from FIG. 2. Coordinates of point D are $(P_2, A_2)$, indicating that the offset of the phase value of the specific code word relative to the phase value of the received spread spectrum signal is $P_2$, and that the amplitude value of the despread signal obtained by using the specific code word is $A_2$, where $P_2 - P_1 = P_1 - P_0 = \Delta p$. First, it is determined that an amplitude variation corresponding to $\Delta p$ is $\Delta A$. Assuming that a chip width of the specific code word is $p$, a maximum offset of the phase value of the specific code word relative to the phase value of the received spread spectrum signal is $p$. According to the schematic diagram of the relationship shown in FIG. 2, $\dfrac{A_{max}}{p} = \dfrac{\Delta A}{\Delta p}$.

Therefore, the maximum amplitude value $A_{max}$ of the despread signal obtained by using the specific code word can be further determined, and the difference between the phase value of the specific code word and the phase value of the received spread spectrum signal is further determined.

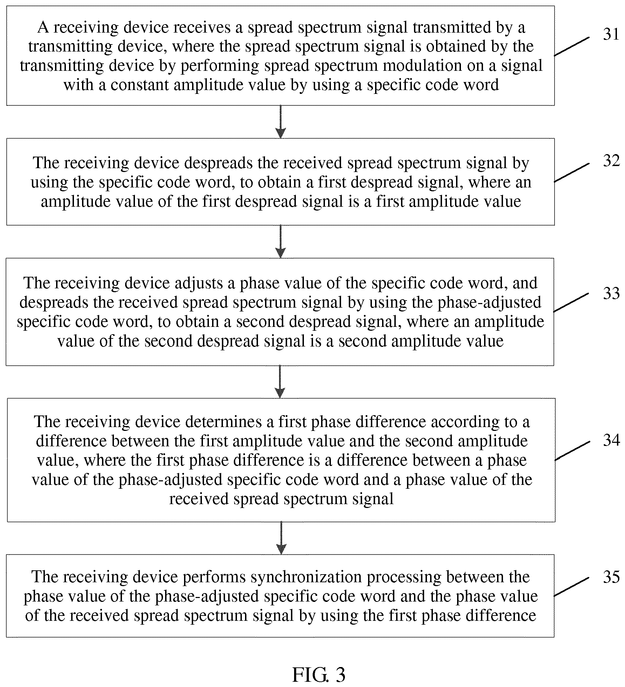

According to the foregoing idea, first, an embodiment of the present invention provides a method for phase synchronization by using a specific code word. Referring to FIG. 3, FIG. 3 is a flowchart of a method for phase synchronization according to an embodiment of the present invention. The method shown in FIG. 3 includes the following steps.

Step 31: A receiving device receives a spread spectrum signal transmitted by a transmitting device, where the spread spectrum signal is obtained by the transmitting device by performing spread spectrum modulation on a signal with a constant amplitude value by using a specific code word.

Step 32: The receiving device despreads the received spread spectrum signal by using the specific code word, to obtain a first despread signal, where an amplitude value of the first despread signal is a first amplitude value.

Step 33: The receiving device adjusts a phase value of the specific code word, and despreads the received spread spectrum signal by using the phase-adjusted specific code word, to obtain a second despread signal, where an amplitude value of the second despread signal is a second amplitude value.

Step 34: The receiving device determines a first phase difference according to a difference between the first amplitude value and the second amplitude value, where the first phase difference is a difference between a phase value of the phase-adjusted specific code word and a phase value of the received spread spectrum signal.

Step 35: The receiving device performs synchronization processing between the phase value of the phase-adjusted specific code word and the phase value of the received spread spectrum signal by using the first phase difference.

Step 33 may also be replaced as follows: The receiving device receives the spread spectrum signal that is phase-adjusted and transmitted by the transmitting device, where the phase-adjusted spread spectrum signal is obtained by the transmitting device by adjusting a phase value of the transmitted spread spectrum signal; and the receiving device despreads the received phase-adjusted spread spectrum signal by using the specific code word, to obtain a second despread signal, where an amplitude value of the second despread signal is a second amplitude value.

First, a CDMA system performs step 31 to step 33 to obtain the first despread signal and the second despread signal. The amplitude value of the first despread signal is the first amplitude value, and the amplitude value of the second despread signal is the second amplitude value. In this document, $A_0$ is used to indicate the first amplitude value, and $A_1$ is used to indicate the second amplitude value.

To obtain the first despread signal, the receiving device only needs to despread the received spread spectrum signal. Specifically, the transmitting device performs spread spectrum modulation on the signal with the constant amplitude value by using the specific code word, and transmits the obtained spread spectrum signal to the receiving device. The receiving device despreads the received spread spectrum signal by using the specific code word, to obtain the first despread signal, and determines that the amplitude value of the first despread signal is the first amplitude value.

There are the following two methods for obtaining the second despread signal:

The first method is performed by the receiving device. Specifically, the receiving device adjusts the phase of the specific code word, and then despreads the received spread spectrum signal by using the phase-adjusted specific code word, to obtain the despread signal with the second amplitude value. Before and after the phase adjustment of the specific code word, the spread spectrum signal received by the receiving device is the same signal and is unchanged.

Using the first method, the receiving device needs to receive only one spread spectrum signal, and then despread the received spread spectrum signal with the same phase separately by using two specific code words with different phase values, to obtain the first despread signal and the second despread signal.

The second method is performed by the transmitting device and the receiving device. Specifically, after the transmitting device transmits the spread spectrum signal, the transmitting device adjusts the phase of the spread spectrum signal, where an adjustment value is a specific phase value, that is, adds the specific phase value to the phase value of the spread spectrum signal, and then transmits the phase-adjusted spread spectrum signal to the receiving device. The receiving device despreads the phase-adjusted spread spectrum signal to obtain the despread signal with the second amplitude value. Before and after the phase adjustment of the spread spectrum signal, the phase of the specific code word is unchanged.

Using the second method, the receiving device needs to receive two spread spectrum signals with different phase values separately, and then despread the two received spread spectrum signals separately by using the specific code word with the same phase value, to obtain the first despread signal and the second despread signal.

It should be noted that, an adjustment value of the phase adjustment performed by the receiving device on the specific code word is the same as an adjustment value of the phase adjustment performed by the transmitting device on the transmitted spread spectrum signal. In an actual implementation process, the adjustment value is a specific phase value. That is, the specific phase value is added to the phase value of the specific code word, or the specific phase value is added to the phase value of the transmitted spread spectrum signal. In this document, $\Delta p$ indicates the specific phase value. A value of $\Delta p$ is fixed in a CDMA system, and is far less than a chip width. In different CDMA system designs, values of $\Delta p$ are different.

Then step 34 is performed. The receiving device determines the first phase difference.

The first phase difference is the difference between the phase value of the phase-adjusted specific code word and the phase value of the received spread spectrum signal. Specifically, there are the following two cases:

In the first case, if the difference between the first amplitude value and the second amplitude value is 0, the receiving device determines that the first phase difference complies with the following formula: $-\dfrac{abs(\Delta p)}{2}$, where $abs(\Delta p)$ indicates an absolute value of the phase adjustment.

Specifically, a first amplitude difference is $\Delta A_1$, and $\Delta A_1 = A_1 - A_0$. If $\Delta A_1 = 0$, that is, $A_1 = A_0$, the receiving device determines that the difference between the phase value of the phase-adjusted specific code word and the phase value of the received spread spectrum signal is $-\dfrac{abs(\Delta p)}{2}$.

In the second case, if the difference between the first amplitude value and the second amplitude value is not 0, the CDMA system further needs to obtain a third despread signal, where an amplitude value of the third despread signal is a third amplitude value. In this document, $A_2$ is used to indicate the third amplitude value. That is, before the receiving device determines the first phase difference, the method further includes:

the receiving device readjusts the phase value of the phase-adjusted specific code word, and despreads the received spread spectrum signal by using the phase-readjusted specific code word, to obtain a third despread signal, where an amplitude value of the third despread signal is a third amplitude value; or the receiving device receives the spread spectrum signal that is phase-readjusted and transmitted by the transmitting device, where the phase-readjusted spread spectrum signal is obtained by the transmitting device by readjusting a phase of the phase-adjusted spread spectrum signal; and the receiving device despreads the received phase-readjusted spread spectrum signal by using the specific code word, to obtain a third despread signal, where an amplitude value of the third despread signal is a third amplitude value.

A method for obtaining the third despread signal is similar to a method for obtaining the second despread signal. It should be noted that, the third despread signal is obtained after the second despread signal is obtained. That is, if the receiving device adjusts the phase value of the specific code word to obtain the second despread signal, the third despread signal is obtained by readjusting the phase of the phase-adjusted specific code word.

For example, to obtain the second despread signal, the receiving device adjusts the phase of the specific code word by the specific phase value; in this case, to obtain the third despread signal, the receiving device readjusts, by the specific phase value, the specific code word whose phase is already adjusted by the specific phase value, and then despreads the received spread spectrum signal by using the phase-readjusted specific code word.

The receiving device needs to receive only one spread spectrum signal, and then despread the received spread spectrum signal with the same phase separately by using three specific code words with different phase values, to obtain the first despread signal, the second despread signal, and the third despread signal.

If the transmitting device adjusts the phase value of the transmitted spread spectrum signal to obtain the second despread signal, the third despread signal is obtained by readjusting the phase-adjusted spread spectrum signal.

For example, to obtain the second despread signal, the transmitting device adjusts the phase of the transmitted spread spectrum signal by the specific phase value; in this case, to obtain the third despread signal, the transmitting device readjusts, by the specific phase value, the spread spectrum signal whose phase is already adjusted by the specific phase value, and then the receiving device despreads the received phase-readjusted spread spectrum signal by using the specific code word.

The receiving device needs to separately receive three spread spectrum signals with different phase values, and then despread the three received spread spectrum signals by using the specific code word with the same phase, to obtain the first despread signal, the second despread signal, and the third despread signal.

It should be noted that, regardless of whether two phase adjustments are performed on the specific code word or two phase adjustments are performed on the transmitted spread spectrum signal, an adjustment value in each phase adjustment should be the same. For example, the phase value of the specific code word is first adjusted by the specific phase value, and then the phase value of the phase-adjusted specific code word is readjusted by the specific phase value.

After the third amplitude value is obtained, the second case includes: the receiving device uses the difference between the first amplitude value and the second amplitude value as a first amplitude difference, and uses a difference between the third amplitude value and the second amplitude value as a second amplitude difference; and the receiving device determines the first phase difference according to the first amplitude difference and the second amplitude difference. There are the following two specific cases:

In the first specific case:
if the first amplitude difference is not equal to the second amplitude difference, or the first amplitude difference is equal to the second amplitude difference and the second amplitude difference is less than 0, the receiving device determines that the first phase difference complies with the following formula:

$$\left( \frac{A_2}{A_{\max}} - 1 \right) * p \, ,$$

where $A_{\max}$ indicates a maximum amplitude value corresponding to the specific code word, $p$ indicates a chip width of the specific code word, and $A_2$ indicates the third amplitude value.

In the second specific case:
if the first amplitude difference is equal to the second amplitude difference and the second amplitude difference is greater than 0, the receiving device determines that the first phase difference complies with the following formula:

$$\left( 1 - \frac{A_2}{A_{\max}} \right) * p \, ,$$

where $A_{\max}$ indicates a maximum amplitude value corresponding to the specific code word, $p$ indicates a chip width of the specific code word, and $A_2$ indicates the third amplitude value.

Specifically, the second amplitude difference is $\Delta A_2$, and $\Delta A_2 = A_2 - A_1$. The receiving device may determine an amplitude variation $\Delta A$ corresponding to $\Delta p$, and $\Delta A = \max (abs(AA_1), abs(\Delta A_2))$. That is, $\Delta A$ indicates the amplitude variation corresponding to the phase adjustment value of the specific code word or the spread spectrum signal, and $\Delta A$ complies with the following formula: $\Delta A = \max(abs(\Delta A_1), abs(\Delta A_2))$, where $abs(\Delta A_1)$ indicates an absolute value of the first amplitude difference, and $abs(\Delta A_2)$ indicates an absolute value of the second amplitude difference.

Using the schematic diagram of the relationship shown in FIG. 2 as an example, if the first amplitude difference $\Delta A_1$ is not equal to 0, it indicates that point A and point B are not mutually symmetric points. In this case, coordinates of point C cannot be determined directly. In this case, it is necessary to first determine that the amplitude variation corresponding to $\Delta p$ is $\Delta A$. Specifically, the absolute value of the second amplitude difference $\Delta A_2$ needs to be compared with the absolute value of the first amplitude difference $\Delta A_1$, and a larger one of the absolute value of the second amplitude difference $\Delta A_2$ and the absolute value of the first amplitude difference $\Delta A_1$ is used as $\Delta A$. A reason for using the larger one is: the third amplitude value $A_2$ is obtained by the receiving device by adjusting the phase of the specific code word by $\Delta p$ twice or by the transmitting device by adjusting the phase of the transmitted spread spectrum signal by $\Delta p$ twice. Therefore, the following two cases may occur:

In the first case, the first amplitude value $A_0$ and the second amplitude value $A_1$ are distributed on one side of point C, but the third amplitude value $A_2$ is distributed on another side of point C.

In the second case, the first amplitude value $A_0$ is distributed on one side of point C, but the second amplitude value $A_1$ and the third amplitude value $A_2$ are distributed on another side of point C.

With reference to the schematic diagram of the relationship shown in FIG. 2, it can be known that, in the absolute value of the second amplitude difference $\Delta A_2$ and the absolute value of the first amplitude difference $\Delta A_1$, only an amplitude difference between two amplitude values on a same side of point C can reflect the amplitude variation $\Delta A$ corresponding to $\Delta p$.

Then, according to the schematic diagram of the relationship shown in FIG. 2, $\dfrac{A\max}{p} = \dfrac{\Delta A}{\Delta p}$. Therefore, the maximum amplitude value $A_{\max}$ corresponding to the specific code word can be further determined. That is, the maximum amplitude value $A_{\max}$ corresponding to the specific code word complies with the following formula: $A_{\max} = \Delta A * \dfrac{p}{abs(\Delta\mathrm{p})}$, where $abs(\Delta p)$ indicates the absolute adjustment value of the phase of the specific code word or the spread spectrum signal.

Finally, if $\Delta A_2$ is not equal to $\Delta A_1$, namely, $A_2 - A_1 \neq A_1 - A_0$, or if $\Delta A_2$ is equal to $\Delta A_1$ and $\Delta A_1$ is less than 0, the receiving device determines that a phase difference between a current phase and a synchronous phase is $\left(1 - \dfrac{A_2}{A_{\max}}\right) * p$ or if $\Delta A_2$ is equal to $\Delta A_1$ and $\Delta A_1$ is greater than 0, the receiving device determines that a phase difference between a current phase and a syn-

chronous phase is $\left(\dfrac{A_2}{A_{\max}} - 1\right) * p$.

Then step 35 is performed. Specifically, step 35 may be performed by using the following two methods:

The first method is performed by the receiving device. Specifically, the receiving device adds the first phase difference to the phase value of phase-adjusted specific code word. The first method is to adjust the phase value of the specific code word, and keep the phase value of the received spread spectrum signal unchanged.

The second method is performed by the transmitting device and the receiving device. Specifically, the receiving device transmits the first phase difference to the transmitting device, and instructs the transmitting device to add the first phase difference to the phase value of the transmitted spread spectrum signal, and the transmitting device adds the first phase difference to the phase value of the transmitted spread spectrum signal. By using the second method, the phase value of the transmitted spread spectrum signal is adjusted. Correspondingly, the phase value of the spread spectrum signal received by the receiving device is adjusted, and the phase value of the specific code word remains unchanged.

Step 34 in the foregoing embodiment may also be replaced as follows: The receiving device determines a second phase difference according to a difference between the first amplitude value and the second amplitude value, where the second phase difference is a difference between the phase value of the phase-unadjusted specific code word and a phase value of the received spread spectrum signal.

Correspondingly, step 35 may be replaced as follows: The receiving device performs synchronization processing between the phase value of the phase-unadjusted specific code word and the phase value of the received spread spectrum signal by using the second phase difference. This includes: the receiving device adds the second phase difference to the phase value of the phase-unadjusted specific code word; or the receiving device transmits the second phase difference to the transmitting device, and instructs the transmitting device to add the second phase difference to the phase value of the transmitted spread spectrum signal.

Specifically, the receiving device determines the second phase difference. The second phase difference is the difference between the phase value of the phase-unadjusted specific code word and the phase value of the received spread spectrum signal. Specifically, there are the following two cases:

In the first case, if the difference between the first amplitude value and the second amplitude value is 0, the receiving device determines that the second phase difference complies with the following formula: $\dfrac{abs(\Delta p)}{2}$ ,

where $abs(\Delta p)$ indicates an absolute value of the phase adjustment.

Specifically, a first amplitude difference is $\Delta A_1$, and $\Delta A_1 = A_1 - A_0$. If $\Delta A_1 = 0$, that is, $A_1 = A_0$, the receiving device determines that the difference between the phase value of the phase-unadjusted specific code word and the phase value of the received spread spectrum signal is $\dfrac{abs(\Delta p)}{2}$ .

In the second case, if the difference between the first amplitude value and the second amplitude value is not 0, the CDMA system further needs to obtain a third despread signal, where an amplitude value of the third despread signal is a third amplitude value. In this document, $A_2$ is used to indicate the third amplitude value. That is, before the receiving device determines the second phase difference, the method further includes:

the receiving device readjusts a phase value of the phase-adjusted specific code word, and despreads the received spread spectrum signal by using the phase-readjusted specific code word, to obtain a third despread signal, where an amplitude value of the third despread signal is a third amplitude value; or
the receiving device receives the spread spectrum signal that is phase-readjusted and transmitted by the transmitting device, where the phase-readjusted spread spectrum signal is obtained by the transmitting device by readjusting a phase of the phase-adjusted spread spectrum signal; and the receiving device despreads the received phase-readjusted spread spectrum signal by using the specific code word, to obtain a third despread signal, where an amplitude value of the third despread signal is a third amplitude value.

A method for obtaining the third despread signal is already described above. Details are not described again herein.

After the third amplitude value is obtained, the second case includes: the receiving device uses the difference between the first amplitude value and the second amplitude value as a first amplitude difference, and uses a difference between the third amplitude value and the second amplitude value as a second amplitude difference; and the receiving device determines the second phase difference according to the first amplitude difference and the second amplitude difference. There are the following two specific cases:

In the first specific case:
if the first amplitude difference is not equal to the second amplitude difference, or the first amplitude difference is equal to the second amplitude difference and the second amplitude difference is less than 0, the receiving device determines that the second phase difference complies with the following formula:

$$\left( \frac{A_1}{A_{max}} - 1 \right) * p$$ ,

where $A_{max}$ indicates a maximum amplitude value corresponding to the specific code word, $p$ indicates a chip width of the specific code word, and $A_1$ indicates the first amplitude value.
In the second specific case:
if the first amplitude difference is equal to the second amplitude difference and the second amplitude difference is greater than 0, the receiving device determines that the second phase difference complies with the following formula:

$$\left( 1 - \frac{A_1}{A_{max}} \right) * p$$ ,

where $A_{max}$ indicates a maximum amplitude value corresponding to the specific code word, $p$ indicates a chip width of the specific code word, and $A_1$ indicates the first amplitude value.

$A_{max}$, $p$, and $A_1$ are already described in detail above, and are not described again herein.
Then the substitute step for step 35 is performed. Specifically, in the same way as performing step 35, the substitute step for step 35 may be performed by using the following two methods:

The first method is performed by the receiving device. Specifically, the receiving device adds the second phase difference to the phase value of the phase-unadjusted specific code word. The first method is to adjust the phase value of the specific code word, and keep the phase value of the received spread spectrum signal unchanged.
The second method is performed by the transmitting device and the receiving device. Specifically, the receiving device transmits the second phase difference to the transmitting device, and instructs the transmitting device to add the second phase difference to the phase value of the transmitted spread spectrum signal, and the transmitting device adds the second phase difference to the phase value of the transmitted spread spectrum signal. By using the second method, the phase value of the transmitted spread spectrum signal is adjusted. Correspondingly, the phase value of the spread spectrum signal received by the receiving device is adjusted, and the phase value of the specific code word remains unchanged.

It should be noted that, because the substitute step for step 35 requires the receiving device to add the second phase difference to the phase value of the phase-unadjusted specific code word, but after step 33 is performed, the phase value of the specific code word is already changed to the adjusted phase value, in the process of performing step 35, the phase value of the specific code word first needs to be restored to the unadjusted phase value, and then the second phase difference is added to the phase value of the phase-unadjusted specific code word.

Based on the same technical idea, an embodiment of the present invention further provides a method for eliminating a phase jitter. The method for phase synchronization is mainly used to eliminate a phase jitter after a phase value of a specific code word is synchronized with a phase value of a received spread spectrum signal. The phase value of the specific code word may be synchronized with the phase value of the received spread spectrum signal by using the method shown in FIG. 3, or by using another method. This is not limited in the present invention. However, the specific code word needs to be used for performing spread spectrum modulation and demodulation, because a principle of eliminating a phase jitter in this embodiment of the present invention still depends on a feature of the specific code word.

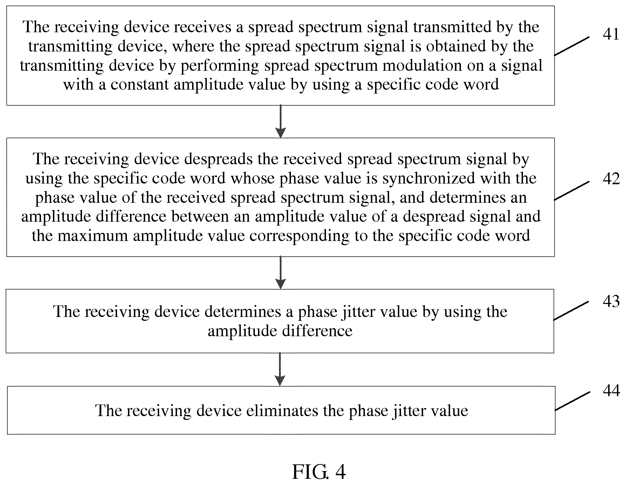

If the method shown in FIG. 3 is used for processing, after step 35 is performed, referring to FIG. 4, the method further includes the following steps.

Step 41: The receiving device receives a spread spectrum signal transmitted by the transmitting device, where the spread spectrum signal is obtained by the transmitting device by performing spread spectrum modulation on a signal with a constant amplitude value by using a specific code word.

Step 42: The receiving device despreads the received spread spectrum signal by using the specific code word whose phase value is synchronized with the phase value of the received spread spectrum signal, and determines an amplitude difference between an amplitude value of a despread signal and the maximum amplitude value corresponding to the specific code word.

Step 43: The receiving device determines a phase jitter value by using the amplitude difference.

Step 44: The receiving device eliminates the phase jitter value.

First, the receiving device performs step 41 and step 42 to determine whether a phase jitter occurs. After implementing synchronization between the phase value of the specific code word and the phase value of the received spread spectrum signal by using the specific code word, the receiving device determines the amplitude difference between the amplitude value of the despread signal that is obtained by using the specific code word and the maximum amplitude value corresponding to the specific code word, and if the amplitude value is greater than a predetermined threshold, determines that a phase jitter occurs, and therefore needs to eliminate the phase jitter.

Then, the receiving device performs step 43 to determine the phase jitter value. Specifically, after synchronization between the phase value of the specific code word and the phase value of the received spread spectrum signal is implemented by using the specific code word, the maximum amplitude value $A_{max}$ corresponding to the specific code word is known. Therefore, if a phase jitter occurs after the synchronization, according to the schematic diagram of the relationship shown in FIG. 2, $\dfrac{A\max}{p} = \dfrac{\text{Amplitude variation}}{\text{Phase jitter value}}$ , and

$$\text{Phase jitter value} = \frac{\text{Amplitude variation}}{A\max} * p$$

is obtained. An amplitude variation, namely, the amplitude difference in step 42, is obtained after step 41 and step 42 are performed. Therefore, the phase jitter value, namely, the phase difference between the phase value of the specific code word and the phase value of the received spread spectrum signal, may be obtained according to Phase

$$\text{jitter value} = \frac{\text{Amplitude variation}}{A\max} * p \, , \quad \text{where}$$

$p$ is a chip width of the specific code word.

Finally, step 44 is performed to eliminate the phase jitter value. Specifically, there are the following two methods:

The first method is performed by the receiving device. Specifically, the receiving device adds the phase jitter value to the phase value of the specific code word. The first method is to adjust the phase value of the specific code word, and keep the phase value of the received spread spectrum signal unchanged.

The second method is performed by the transmitting device and the receiving device. Specifically, the receiving device transmits the phase jitter value to the transmitting device, and the transmitting device adds the phase jitter value to the phase value of the transmitted spread spectrum signal. By using the second method, the phase value of the transmitted spread spectrum signal is adjusted. Correspondingly, the phase value of the spread spectrum signal received by the receiving device is adjusted, and the phase value of the specific code word remains unchanged.

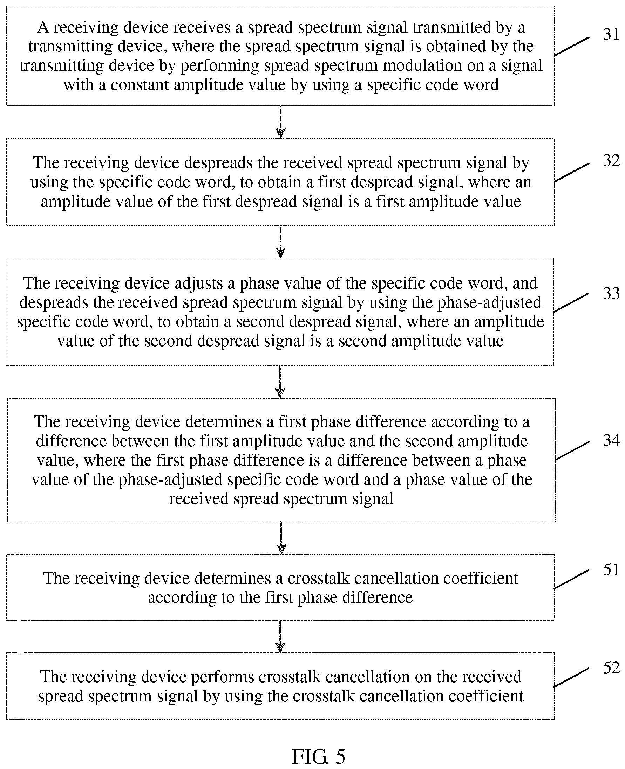

An embodiment of the present invention further provides a method for determining a crosstalk cancellation coefficient, and then using the crosstalk cancellation coefficient to implement synchronization between a phase value of a specific code word and a phase value of a received spread spectrum signal. Referring to FIG. 5, FIG. 5 is another flowchart of a method for phase synchronization according to an embodiment of the present invention. The method includes step 31 to step 34 and the following steps:

Step 51: The receiving device determines a crosstalk cancellation coefficient according to the first phase difference.

Step 52: The receiving device performs crosstalk cancellation on the received spread spectrum signal by using the crosstalk cancellation coefficient.

Step 51 is specifically as follows: The receiving device determines a crosstalk channel variation corresponding to the unit phase difference; the receiving device determines a crosstalk channel according to the first phase difference and the crosstalk channel variation; and the receiving device performs processing on the crosstalk channel to determine the crosstalk cancellation coefficient.

The crosstalk cancellation coefficient is generated by the receiving device or the transmitting device according to the phase difference between the phase value of the specific code word and the phase value of the received spread spectrum signal. The first phase difference indicates the difference between the phase value of the specific code word and the phase value of the received spread spectrum signal. To obtain the first phase difference, the method shown in FIG. 3 may be used, or another method may be used, as long as the phase difference between the phase value of the specific code word and the phase value of the received spread spectrum signal can be obtained. This is not limited in this embodiment of the present invention. Certainly, the first phase difference may also be replaced with a second phase difference in this document.

In a CDMA system, other code words than the foregoing specific code word among numerous code words used for spread spectrum modulation and despreading have the following feature: A crosstalk channel between other code words is related only to an offset of the phase value of the specific code word relative to the phase value of the received spread spectrum signal, and a linear relationship exists between the crosstalk channel and the offset of the phase value of the specific code word relative to the phase value of the received spread spectrum signal, that is, if the offset of the phase value of the specific code word relative to the phase value of the received spread spectrum signal is (x*n), the corresponding crosstalk channel is (H*n). Therefore, the crosstalk cancellation coefficient may be determined directly according to the offset of the phase value of the specific code word relative to the phase value of the received spread spectrum signal, a complex crosstalk cancellation coefficient training process is avoided, and real-time crosstalk cancellation is implemented.

Therefore, an embodiment of the present invention provides two methods for determining a crosstalk cancellation coefficient.

The first method is as follows: Because a crosstalk channel between CDMA code words (except the foregoing specific code word) is related only to an offset of a phase value of a specific code word relative to a phase value of a received spread spectrum signal, a crosstalk cancellation coefficient table corresponding to the offset of the phase value of the specific code word relative to the phase value of the received spread spectrum signal may be computed in advance, and online computation is not required; and when a crosstalk cancellation coefficient needs to be used, the table may be directly searched. The method occupies a lot of space and requires little computation. The method may be performed by a transmitting device, or may be performed by a receiving device.

The receiving device obtains a crosstalk cancellation coefficient table, where the crosstalk cancellation coefficient table includes crosstalk cancellation coefficients respectively corresponding to multiple phase differences; and the receiving device finds, from the crosstalk cancellation coefficient table, a crosstalk cancellation coefficient that matches a phase difference.

The second method is as follows: A crosstalk channel variation corresponding to a unit phase offset is stored; a corresponding crosstalk channel is computed directly according to an offset of a phase value of a specific code word relative to a phase value of a received spread spectrum signal; and then inversion is performed on the corresponding crosstalk channel to obtain a corresponding crosstalk cancellation coefficient. The method occupies little space and requires a lot of computation. The method may be performed by a transmitting device, or may be performed by a receiving device. That is,

The receiving device obtains a crosstalk channel variation corresponding to a unit phase difference; the receiving device determines a crosstalk channel according to the phase difference and the crosstalk channel variation; and the receiving device performs processing on the crosstalk channel to obtain a crosstalk cancellation coefficient.

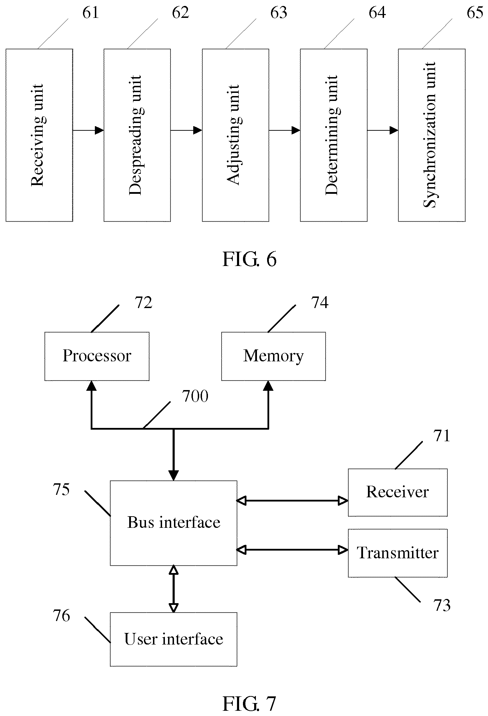

Based on the same inventive conception, an embodiment of the present invention further provides an apparatus for phase synchronization. Referring to FIG. 6, FIG. 6 is a schematic diagram of functional modules of an apparatus for phase synchronization according to an embodiment of the present invention. For meanings and specific implementations of terms used in the apparatus for phase synchronization shown in FIG. 6, refer to the descriptions about the foregoing embodiments in FIG. 1 to FIG. 5.

In FIG. 7, for a bus architecture (represented by a bus 700), the bus 700 may include any quantity of interconnecting buses and bridges, and the bus 700 interconnects various circuits of one or more processors represented by the processor 72 and a memory represented by a memory 74. The bus 700 may further interconnect various other circuits such as a peripheral device, a voltage regulator, and a power management circuit. These are all well known in the art, and therefore are not described in the document. A bus interface 75 provides an interface between the bus 700 and the receiver 71 and the transmitter 73. The receiver 71 and the transmitter 73 may be a same component, namely, a transceiver, providing units for communicating with various other apparatuses over a transmission medium. Depending on a nature of the apparatus as user equipment, a user interface 76 may be further provided, and configured to connect to a small keyboard, a display, a speaker, a microphone, or a joystick, or the like.

The processor 72 is responsible for managing the bus 700 and general processing. The memory 74 may be configured to store data used when the processor 72 performs an operation.

Variations and specific examples of the method for phase synchronization in the foregoing embodiments in FIG. 1 to FIG. 5 are also applicable to the apparatus for phase synchronization in this embodiment of the present invention. From the foregoing detailed descriptions about the method for phase synchronization, persons skilled in the art may clearly know an implementation method of the apparatus for phase synchronization in this embodiment. Therefore, for brevity of the specification, details are not described again herein.

One or more technical solutions provided in the embodiments of the present invention have at least the following technical effects or advantages:

The embodiments of the present invention utilize a feature of a specific code word, namely, a relationship between a phase difference of the specific code word and an amplitude difference of a despread signal. Therefore, a phase difference between a current phase of a receiving device and a synchronous phase may be determined according to the amplitude difference of the despread signal, and further, the determined phase difference is added to the current phase of the receiving device, so that the current phase of the receiving device is a synchronous phase. In this way, the phase of the receiving device is synchronized with that of a received spread spectrum signal. Therefore, channel crosstalk is avoided, and a signal-to-noise ratio of the signal despread by the receiving device is increased.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

## Claims

1. A method for phase synchronization, wherein the method comprises:

   receiving (31), by a receiving device, a spread spectrum signal transmitted by a transmitting device, wherein the spread spectrum signal is obtained by the transmitting device by performing spread spectrum modulation on a signal with a constant amplitude value by using a specific code word;
   despreading (32), by the receiving device, the received spread spectrum signal by using the specific code word, to obtain a first despread signal, wherein an amplitude value of the first despread signal is a first amplitude value;
   adjusting (33), by the receiving device, a phase value of the specific code word, and despreading the received spread spectrum signal by using the phase-adjusted specific code word, to obtain a second despread signal, wherein an amplitude value of the second despread signal is a second amplitude value;
   determining (34), by the receiving device, a first phase difference according to a difference between the first amplitude value and the second amplitude value, wherein the first phase difference is a difference between a phase value of the phase-adjusted specific code word and a phase value of the received spread spectrum signal; and
performing (35), by the receiving device, synchronization processing between the phase value of the phase-adjusted specific code word and the phase value of the received spread spectrum signal by using the first phase difference; **characterised in that** the performing, by the receiving device, synchronization processing between the phase value of the phase-adjusted specific code word and the phase value of the received spread spectrum signal by using the first phase difference comprises:
transmitting, by the receiving device, the first phase difference to the transmitting device, and instructing the transmitting device to add the first phase difference to the phase value of the transmitted spread spectrum signal.

2. The method according to claim 1, wherein the determining, by the receiving device, a first phase difference according to a difference between the first amplitude value and the second amplitude value comprises:
if the difference between the first amplitude value and the second amplitude value is 0, determining, by the receiving device, that the first phase difference is as 0.

3. The method according to claim 1, wherein the difference between the first amplitude value and the second amplitude value is not 0;
the method further comprises:

readjusting, by the receiving device, the phase value of the phase-adjusted specific code word, and despreading the received spread spectrum signal by using the phase-readjusted specific code word, to obtain a third despread signal, wherein an amplitude value of the third despread signal is a third amplitude value; and
the determining, by the receiving device, a first phase difference according to a difference between the first amplitude value and the second amplitude value comprises:

using, by the receiving device, the difference between the first amplitude value and the second amplitude value as a first amplitude difference, and using a difference between the third amplitude value and the second amplitude value as a second amplitude difference; and
determining, by the receiving device, the first phase difference according to the first amplitude difference and the second amplitude difference.

4. The method according to claim 3, wherein the determining, by the receiving device, the first phase difference according to the first amplitude difference and the second amplitude difference comprises:

if the first amplitude difference is not equal to the second amplitude difference, or the first amplitude difference is equal to the second amplitude difference and the second amplitude difference is less than 0, determining, by the receiving device, that the first phase difference complies with the following formula:

$$\left(\frac{A_2}{A_{max}} - 1\right) * p\ ;$$

or
if the first amplitude difference is equal to the second amplitude difference and the second amplitude difference is greater than 0, determining, by the receiving device, that the first phase difference complies with the following formula:

$$\left(1 - \frac{A_2}{A_{max}}\right) * p\ ,$$

wherein $A_{max}$ indicates a maximum amplitude value corresponding to the specific code word, $p$ indicates a chip width of the specific code word, and $A_2$ indicates the third amplitude value.

5. The method according to claim 4, wherein the maximum amplitude value $A_{max}$ corresponding to the specific code word complies with the following formula: $A_{max} = \Delta A * \dfrac{p}{abs(\Delta p)}$, wherein $abs(\Delta p)$ indicates an absolute value of the phase adjustment, and $\Delta A$ indicates an amplitude variation corresponding to the specific phase difference.

6. The method according to any one of claims 1 to 5, wherein after the performing, by the receiving device, synchronization processing between the phase value of the phase-adjusted specific code word and the phase value of the received spread spectrum signal, the method further comprises:

receiving, by the receiving device, a spread spectrum signal transmitted by the transmitting device, wherein the spread spectrum signal is obtained by the transmitting device by performing spread spectrum modulation on a signal with a constant amplitude value by using a specific code word;

despreading, by the receiving device, the received spread spectrum signal by using the specific code word whose phase value is synchronized with the phase value of the received spread spectrum signal, and determining an amplitude difference between an amplitude value of a despread signal and the maximum amplitude value corresponding to the specific code word;

determining, by the receiving device, a phase jitter value by using the amplitude difference; and

eliminating, by the receiving device, the phase jitter value.

7. The method according to any one of claims 1 to 6, wherein the performing, by the receiving device, synchronization processing between the phase value of the phase-adjusted specific code word and the phase value of the received spread spectrum signal by using the first phase difference comprises:

determining, by the receiving device, a crosstalk cancellation coefficient according to the first phase difference; and

performing, by the receiving device, crosstalk cancellation on the received spread spectrum signal by using the crosstalk cancellation coefficient.

8. An apparatus for phase synchronization, wherein the apparatus comprises:

a receiving unit (61), configured to receive a spread spectrum signal transmitted by a transmitting device, wherein the spread spectrum signal is obtained by the transmitting device by performing spread spectrum modulation on a signal with a constant amplitude value by using a specific code word;

a despreading unit (62), configured to despread the received spread spectrum signal by using the specific code word, to obtain a first despread signal, wherein an amplitude value of the first despread signal is a first amplitude value;

an adjusting unit (63), configured to adjust a phase value of the specific code word, and despread the received spread spectrum signal by using the phase-adjusted specific code word, to obtain a second despread signal, wherein an amplitude value of the second despread signal is a second amplitude value;

a determining unit (64), configured to determine a first phase difference according to a difference between the first amplitude value and the second amplitude value, wherein the first phase difference is a difference between a phase value of the phase-adjusted specific code word and a phase value of the received spread spectrum signal; and

a synchronization unit (65), configured to perform synchronization processing between the phase value of the phase-adjusted specific code word and the phase value of the received spread spectrum signal by using the first phase difference;

**characterised in that**

the synchronization unit is configured to: transmit the first phase difference to the transmitting device, and instruct the transmitting device to add the first phase difference to the phase value of the transmitted spread spectrum signal.

9. The apparatus according to claim 8, wherein the determining unit is configured to:
   if the difference between the first amplitude value and the second amplitude value is 0, determine that the first phase difference is as 0.

10. The apparatus according to claim 8, wherein the difference between the first amplitude value and the second amplitude value is not 0;
    the adjusting unit is further configured to: readjust the phase value of the phase-adjusted specific code word, and despread the received spread spectrum signal by using the phase-readjusted specific code word, to obtain a third despread signal, wherein an amplitude value of the third despread signal is a third amplitude value; and
    the determining unit is configured to:
    use the difference between the first amplitude value and the second amplitude value as a first amplitude difference, use a difference between the third amplitude value and the second amplitude value as a second amplitude difference, and determine the first phase difference according to the first amplitude difference and the second amplitude difference.

11. The apparatus according to claim 10, wherein the determining unit is configured to:

if the first amplitude difference is not equal to the second amplitude difference, or the first amplitude difference is equal to the second amplitude difference and the second amplitude difference is less than 0, determine that the first phase difference complies with the following formula:

$$\left(\frac{A_2}{A_{max}} - 1\right) * p \; ;$$

or

if the first amplitude difference is equal to the second amplitude difference and the second amplitude difference is greater than 0, determine that the first phase difference complies with the following formula:

$$\left(1 - \frac{A_2}{A_{\max}}\right) * p \, ,$$

wherein $A_{\max}$ indicates a maximum amplitude value corresponding to the specific code word, $p$ indicates a chip width of the specific code word, and $A_2$ indicates the third amplitude value.

12. The apparatus according to claim 11, wherein the maximum amplitude value $A_{\max}$ corresponding to the specific code word complies with the following formula: $A_{\max} = \Delta A * \dfrac{p}{abs(\Delta p)}$, wherein $abs(\Delta p)$ indicates an absolute value of the phase adjustment, and $\Delta A$ indicates an amplitude variation corresponding to the specific phase difference.

13. The apparatus according to any one of claims 8 to 12, wherein the receiving unit is further configured to receive a spread spectrum signal transmitted by the transmitting device, wherein the spread spectrum signal is obtained by the transmitting device by performing spread spectrum modulation on a signal with a constant amplitude value by using a specific code word;

the despreading unit is configured to despread the received spread spectrum signal by using the specific code word whose phase value is synchronized with the phase value of the received spread spectrum signal, and determine an amplitude difference between an amplitude value of a despread signal and the maximum amplitude value corresponding to the specific code word;

the determining unit is configured to determine a phase jitter value by using the amplitude difference; and

the synchronization unit is configured to eliminate the phase jitter value.

**Patentansprüche**

1. Verfahren zur Phasensynchronisation, wobei das Verfahren aufweist:

Empfangen (31), durch eine Empfangseinrichtung, eines Spreizspektrumsignals, das durch eine Übertragungseinrichtung übertragen wird, wobei das Spreizspektrumsignal durch die Übertragungseinrichtung erhalten wird, indem eine Spreizspektrummodulation an einem Signal mit einem konstanten Amplitudenwert unter Verwendung eines spezifischen Codeworts durchgeführt wird;

Entspreizen (32), durch die Empfangseinrichtung, des empfangenen Spreizspektrumsignals unter Verwendung des spezifischen Codeworts, um ein erstes entspreiztes Signal zu erhalten, wobei ein Amplitudenwert des ersten entspreizten Signals ein erster Amplitudenwert ist;

Anpassen (33), durch die Empfangseinrichtung, eines Phasenwerts des spezifischen Codeworts durch und Entspreizen des empfangenen Spreizspektrumsignals unter Verwendung des phasenangepassten spezifischen Codeworts, um ein zweites entspreiztes Signal zu erhalten, wobei ein Amplitudenwert des zweiten entspreizten Signals ein zweiter Amplitudenwert ist;

Bestimmen (34), durch die Empfangseinrichtung, einer ersten Phasendifferenz gemäß einer Differenz zwischen dem ersten Amplitudenwert und dem zweiten Amplitudenwert, wobei die erste Phasendifferenz eine Differenz zwischen einem Phasenwert des phasenangepassten spezifischen Codeworts und einem Phasenwert des empfangenen Spreizspektrumsignals ist; und

Durchführen (35), durch die Empfangseinrichtung, einer Synchronisationsverarbeitung zwischen dem Phasenwert des phasenangepassten spezifischen Codeworts und dem Phasenwert des empfangen Spreizspektrumsignals unter Verwendung der ersten Phasendifferenz;

**dadurch gekennzeichnet, dass**

das Durchführen, durch die Empfangseinrichtung, der Synchronisationsverarbeitung zwischen dem Phasenwert des phasenangepassten spezifischen Codeworts und dem Phasenwert des empfangen Spreizspektrumsignals unter Verwendung der ersten Phasendifferenz aufweist:

Übertragen, durch die Empfangseinrichtung, der ersten Phasendifferenz an die Übertragungseinrichtung und Anweisen der Übertragungseinrichtung, die erste Phasendifferenz zu dem Phasenwert des übertragenen Spreizspektrumsignals zu addieren.

2. Verfahren nach Anspruch 1, wobei das Bestimmen, durch die Empfangseinrichtung, einer ersten Phasendifferenz gemäß einer Differenz zwischen dem ersten Amplitudenwert und dem zweiten Amplitudenwert aufweist:

wenn die Differenz zwischen dem ersten Amplitudenwert und dem zweiten Amplitudenwert 0 ist, Bestimmen, durch die Empfangseinrichtung, dass die erste Phasendifferenz gleich 0 ist.

3. Verfahren nach Anspruch 1, wobei die Differenz zwischen dem ersten Amplitudenwert und dem zweiten Amplitudenwert nicht 0 ist;
wobei das Verfahren ferner aufweist:

Neuanpassen, durch die Empfangseinrichtung, des Phasenwerts des spezifischen Codeworts und Entspreizen des empfangenen Spreizspektrumsignals unter Verwendung des neu phasenangepassten spezifischen Codeworts, um ein drittes entspreiztes Signal zu erhalten, wobei ein Amplitudenwert des dritten entspreizten Signals ein dritter Amplitudenwert ist; und
wobei das Bestimmen, durch die Empfangseinrichtung, einer ersten Phasendifferenz gemäß einer Differenz zwischen dem ersten Amplitudenwert und dem zweiten Amplitudenwert aufweist:

Verwenden, durch die Empfangseinrichtung, der Differenz zwischen dem ersten Amplitudenwert und dem zweiten Amplitudenwert als eine erste Amplitudendifferenz, und Verwenden einer Differenz zwischen dem dritten Amplitudenwert und dem zweiten Amplitudenwert als eine zweite Amplitudendifferenz, und
Bestimmen, durch die Empfangseinrichtung, der ersten Phasendifferenz gemäß der ersten Amplitudendifferenz und der zweiten Amplitudendifferenz.

4. Verfahren nach Anspruch 3, wobei das Bestimmen, durch die Empfangseinrichtung, der ersten Phasendifferenz gemäß der ersten Amplitudendifferenz und der zweiten Amplitudendifferenz aufweist:

wenn die erste Amplitudendifferenz nicht gleich der zweiten Amplitudendifferenz ist oder die erste Amplitudendifferenz gleich der zweiten Amplitudendifferenz ist und die zweite Amplitudendifferenz kleiner als 0 ist, Bestimmen, durch die Empfangseinrichtung, dass die erste Phasendifferenz der folgenden Formel entspricht:

$$\left(\frac{A_2}{A_{max}} - 1\right) * p;$$

oder
wenn die erste Amplitudendifferenz gleich der zweiten Amplitudendifferenz ist und die zweite Amplitudendifferenz größer als 0 ist, Bestimmen, durch die Empfangseinrichtung, dass die erste Phasendifferenz der folgenden Formel entspricht:

$$\left(1 - \frac{A_2}{A_{max}}\right) * p,$$

wobei $A_{max}$ einen maximalen Amplitudenwert angibt, der dem spezifischen Codewort entspricht, $p$ eine Chipbreite des spezifischen Codeworts angibt, und $A_2$ den dritten Amplitudenwert angibt.

5. Verfahren nach Anspruch 4, wobei der maximale Amplitudenwert $A_{max}$, der dem spezifischen Codewort entspricht, der folgenden Formel entspricht:

$$A_{max} = \Delta A * \frac{P}{abs(\Delta p)},$$

wobei $abs(\Delta p)$ einen Absolutwert der Phasenanpassung angibt und $\Delta A$ eine Amplitudenänderung angibt, die der spezifischen Amplitudendifferenz entspricht.

6. Verfahren nach einem der Ansprüche 1 bis 5, wobei nach dem Durchführen, durch die Empfangseinrichtung, der Synchronisationsverarbeitung zwischen dem Phasenwert des phasenangepassten spezifischen Codeworts und dem Phasenwert des empfangenen Spreizspektrumsignals das Verfahren ferner aufweist:

Empfangen, durch eine Empfangseinrichtung, eines Spreizspektrumsignals, das durch die Übertragungseinrichtung übertragen wird, wobei das Spreizspektrumsignal durch die Übertragungseinrichtung erhalten wird, indem eine Spreizspektrummodulation an einem Signal mit einem konstanten Amplitudenwert unter Verwendung eines spezifischen Codeworts durchgeführt wird;
Entspreizen, durch die Empfangseinrichtung, des empfangenen Spreizspektrumsignals unter Verwendung des spezifischen Codeworts, dessen Phasenwert mit dem Phasenwert des empfangenen Spreizspektrumsignals synchronisiert ist, und Bestimmen einer Amplitudendifferenz zwischen einem Amplitudenwert eines entspreizten Signals und dem maximalen Amplitudenwert, der dem spezifischen Codewort entspricht;
Bestimmen, durch die Empfangseinrichtung, eines Phasenjitterwerts unter Verwendung der Amplitudendifferenz; und
Eliminieren, durch die Empfangseinrichtung, des Phasenjitterwerts.

7. Verfahren nach einem der Ansprüche 1 bis 6, wobei das Durchführen, durch die Empfangseinrichtung, der Synchronisationsverarbeitung zwischen dem Phasenwert des phasenangepassten spezifischen Codeworts und dem Phasenwert des empfangenen Spreizspektrumsignals unter Verwendung der ersten Phasendifferenz aufweist:

    Bestimmen, durch die Empfangseinrichtung, eines Übersprechen-Löschungskoeffizienten gemäß der ersten Phasendifferenz; und
    Durchführen, durch die Empfangseinrichtung, einer Übersprechlöschung an dem empfangenen Spreizspektrumsignal unter Verwendung des Übersprechen-Löschungskoeffizienten.

8. Vorrichtung zur Phasensynchronisation, wobei die Vorrichtung aufweist:

    eine Empfangseinheit (61), die ausgestaltet ist, um ein Spreizspektrumsignal, das durch eine Übertragungseinrichtung übertragen wird, zu empfangen, wobei das Spreizspektrumsignal durch die Übertragungseinrichtung erhalten wird, indem eine Spreizspektrummodulation an einem Signal mit einem konstanten Amplitudenwert unter Verwendung eines spezifischen Codeworts durchgeführt wird;
    eine Entspreizeinheit (62), die ausgestaltet ist, um das empfangene Spreizspektrumsignal unter Verwendung des spezifischen Codeworts zu entspreizen, um ein erstes entspreiztes Signal zu erhalten, wobei ein Amplitudenwert des ersten entspreizten Signals ein erster Amplitudenwert ist;
    eine Anpasseinheit (63), die ausgestaltet ist, um einen Phasenwert des spezifischen Codeworts anzupassen und das empfangene Spreizspektrumsignal unter Verwendung des phasenangepassten spezifischen Codeworts zu entspreizen, um ein zweites entspreiztes Signal zu erhalten, wobei ein Amplitudenwert des zweiten entspreizten Signals ein zweiter Amplitudenwert ist;
    eine Bestimmungseinheit (64), die ausgestaltet ist, um eine erste Phasendifferenz gemäß einer Differenz zwischen dem ersten Amplitudenwert und dem zweiten Amplitudenwert zu bestimmen, wobei die erste Phasendifferenz eine Differenz zwischen einem Phasenwert des phasenangepassten spezifischen Codeworts und einem Phasenwert des empfangenen Spreizspektrumsignals ist; und
    eine Synchronisationseinheit (65), die ausgestaltet ist, um eine Synchronisationsverarbeitung zwischen dem Phasenwert des phasenangepassten spezifischen Codeworts und dem Phasenwert des empfangenen Spreizspektrumsignals unter Verwendung der ersten Phasendifferenz durchzuführen;
**dadurch gekennzeichnet, dass** die Synchronisationseinheit ausgestaltet ist, um:
die erste Phasendifferenz an die Übertragungseinrichtung zu übertragen, und die Übertragungseinrichtung anzuweisen, die erste Phasendifferenz zu dem Phasenwert des übertragenen Spreizspektrumsignals zu addieren.

9. Vorrichtung nach Anspruch 8, wobei die Bestimmungseinheit ausgestaltet ist, um: wenn die Differenz zwischen dem ersten Amplitudenwert und dem zweiten Amplitudenwert 0 ist, zu bestimmen, dass die erste Phasendifferenz gleich 0 ist.

10. Vorrichtung nach Anspruch 8, wobei die Differenz zwischen dem ersten Amplitudenwert und dem zweiten Amplitudenwert nicht 0 ist;
wobei die Anpasseinheit ferner ausgestaltet ist, um: den Phasenwert des phasenangepassten spezifischen Codeworts neu anzupassen, und das empfangene Spreizspektrumsignal unter Verwendung des neu phasenangepassten spezifischen Codeworts zu entspreizen, wobei ein Amplitudenwert des dritten entspreizten Signals ein dritter Amplitudenwert ist; und wobei die Bestimmungseinheit ausgestaltet ist, um:
die Differenz zwischen dem ersten Amplitudenwert und dem zweiten Amplitudenwert als eine erste Amplitudendifferenz zu verwenden, eine Differenz zwischen dem dritten Amplitudenwert und dem zweiten Amplitudenwert als eine zweite Amplitudendifferenz zu verwenden, und die erste Phasendifferenz gemäß der ersten Amplitudendifferenz und der zweiten Amplitudendifferenz zu bestimmen.

11. Vorrichtung nach Anspruch 10, wobei die Bestimmungseinheit ausgestaltet ist, um:

    wenn die erste Amplitudendifferenz nicht gleich der zweiten Amplitudendifferenz ist, oder die erste Amplitudendifferenz gleich der zweiten Amplitudendifferenz ist und die zweite Amplitudendifferenz kleiner als 0 ist, zu bestimmen, dass die erste Phasendifferenz der folgenden Formel entspricht:

$$\left( \frac{A_2}{A_{max}} - 1 \right) * p;$$

    oder
    wenn die erste Amplitudendifferenz gleich der zweiten Amplitudendifferenz ist und die zweite Amplitudendifferenz größer als 0 ist, zu bestimmen, dass die erste Phasendifferenz der folgenden Formel entspricht:

$$\left(1 - \frac{A_2}{A_{max}}\right) * p,$$

wobei $A_{max}$ einen maximalen Amplitudenwert angibt, der dem spezifischen Codewort entspricht, $p$ eine Chipbreite des spezifischen Codeworts angibt, und $A_2$ den dritten Amplitudenwert angibt.

12. Vorrichtung nach Anspruch 11, wobei der maximale Amplitudenwert $A_{max}$, der dem spezifischen Codewort entspricht, der folgenden Formel entspricht:

$$A_{max} = \Delta A * \frac{P}{abs(\Delta p)},$$

wobei $abs(\Delta p)$ einen Absolutwert der Phasenanpassung angibt und $\Delta A$ eine Amplitudenänderung angibt, die der spezifischen Phasendifferenz entspricht.

13. Vorrichtung nach einem der Ansprüche 8 bis 12, wobei die Empfangseinheit ferner ausgestaltet ist, um ein Spreizspektrumsignal, das durch die Übertragungseinrichtung übertragen wird, zu empfangen, wobei das Spreizspektrumsignal durch die Übertragungseinrichtung erhalten wird, indem eine Spreizspektrummodulation an einem Signal mit einem konstanten Amplitudenwert unter Verwendung eines spezifischen Codeworts durchgeführt wird;
wobei die Entspreizeinheit ausgestaltet ist, um das empfangene Spreizspektrumsignal unter Verwendung des spezifischen Codeworts, dessen Phasenwert mit dem Phasenwert des empfangenen Spreizspektrumsignals synchronisiert ist, zu entspreizen, und eine Amplitudendifferenz zwischen einem Amplitudenwert eines entspreizten Signals und dem maximalen Amplitudenwert, der dem spezifischen Codewort entspricht, zu bestimmen;
wobei die Bestimmungseinheit ausgestaltet ist, um einen Phasenjitterwert unter Verwendung der Amplitudendifferenz zu bestimmen; und
wobei die Synchronisationseinheit ausgestaltet ist, um den Phasenjitterwert zu eliminieren.

**Revendications**

1. Procédé de synchronisation de phase, dans lequel le procédé comprend de :

recevoir (31), par un dispositif de réception, un signal à spectre étalé transmis par un dispositif de transmission, dans lequel le signal à spectre étalé est obtenu par le dispositif de transmission en effectuant une modulation à spectre étalé sur un signal avec une valeur d'amplitude constante en utilisant un mot de code spécifique ;
désétaler (32), par le dispositif de réception, le signal à spectre étalé reçu en utilisant le mot de code spécifique, pour obtenir un premier signal désétalé, dans lequel une valeur d'amplitude du premier signal désétalé est une première valeur d'amplitude ;
ajuster (33), par le dispositif de réception, une valeur de phase du mot de code spécifique, et désétaler le signal reçu à spectre étalé en utilisant le mot de code spécifique ajusté en phase, pour obtenir un second signal désétalé, dans lequel une valeur d'amplitude du second signal désétalé est une seconde valeur d'amplitude ;
déterminer (34), par le dispositif de réception, une première différence de phase en fonction d'une différence entre la première valeur d'amplitude et la seconde valeur d'amplitude, dans lequel la première différence de phase est une différence entre une valeur de phase du mot de code spécifique ajusté en phase et une valeur de phase du signal à spectre étalé reçu ; et
effectuer (35), par le dispositif de réception, un traitement de synchronisation entre la valeur de phase du mot de code spécifique ajusté en phase et la valeur de phase du signal à spectre étalé reçu en utilisant la première différence de phase ;
**caractérisé en ce que**
l'exécution, par le dispositif de réception, d'un traitement de synchronisation entre la valeur de phase du mot de code spécifique ajusté en phase et la valeur de phase du signal à spectre étalé reçu en utilisant la première différence de phase comprend de : transmettre, par le dispositif de réception, la première différence de phase au dispositif de transmission, et ordonner au dispositif de transmission d'ajouter la première différence de phase à la valeur de phase du signal à spectre étalé transmis.

2. Procédé selon la revendication 1, dans lequel la détermination, par le dispositif de réception, d'une première différence de phase en fonction d'une différence entre la première valeur d'amplitude et la seconde valeur d'amplitude comprend de :
si la différence entre la première valeur d'amplitude et la seconde valeur d'amplitude est 0, déterminer, par le dispositif de réception, que la première différence de phase est égale à 0.

3. Procédé selon la revendication 1, dans lequel la différence entre la première valeur d'amplitude et la seconde valeur d'amplitude n'est pas 0 ;
le procédé comprend en outre de :

réajuster, par le dispositif de réception, la valeur de phase du mot de code spécifique ajusté en phase, et désétaler le signal à spectre étalé reçu en utilisant le mot de code spécifique réajusté en phase, pour obtenir un troisième signal désétalé, dans lequel une valeur d'amplitude du troisième le signal désétalé est une troisième valeur d'amplitude ; et

la détermination, par le dispositif de réception, d'une première différence de phase en fonction d'une différence entre la première valeur d'amplitude et la seconde valeur d'amplitude comprend de :

> utiliser, par le dispositif de réception, la différence entre la première valeur d'amplitude et la seconde valeur d'amplitude en tant que première différence d'amplitude, et utiliser une différence entre la troisième valeur d'amplitude et la seconde valeur d'amplitude en tant que seconde différence d'amplitude ; et
>
> déterminer, par le dispositif de réception, la première différence de phase en fonction de la première différence d'amplitude et de la seconde différence d'amplitude.

4. Procédé selon la revendication 3, dans lequel la détermination, par le dispositif de réception, de la première différence de phase en fonction de la première différence d'amplitude et de la seconde différence d'amplitude comprend de :

> si la première différence d'amplitude n'est pas égale à la seconde différence d'amplitude, ou si la première différence d'amplitude est égale à la seconde différence d'amplitude et la seconde différence d'amplitude est inférieure à 0, déterminer, par le dispositif de réception, que la première différence de phase est conforme la formule suivante :

$$\left(\frac{A_2}{A_{max}} - 1\right) * p \ ;$$

ou

si la première différence d'amplitude est égale à la seconde différence d'amplitude et la seconde différence d'amplitude est supérieure à 0, déterminer, par le dispositif de réception, que la première différence de phase est conforme à la formule suivante :

$$\left(1 - \frac{A_2}{A_{max}}\right) * p \ ,$$

où $A_{max}$ indique une valeur d'amplitude maximale correspondant au mot de code spécifique, P indique une largeur d'élément du mot de code spécifique, et $A_2$ indique la troisième valeur d'amplitude.

5. Procédé selon la revendication 4, dans lequel la valeur d'amplitude maximale $A_{max}$ correspondant au mot de code spécifique est conforme à la formule

suivante : $$A_{max} = \Delta A * \frac{p}{abs(\Delta p)}$$ où

$abs(\Delta p)$ indique une valeur absolue de l'ajustement de phase, et $\Delta A$ indique une variation d'amplitude correspondant à la différence de phase spécifique.

6. Procédé selon l'une quelconque des revendications 1 à 5, dans lequel, après l'exécution, par le dispositif de réception, d'un traitement de synchronisation entre la valeur de phase du mot de code spécifique ajusté en phase et la valeur de phase du signal à spectre étalé reçu, le procédé comprend en outre de :

> recevoir, par le dispositif de réception, un signal à spectre étalé transmis par le dispositif de transmission, dans lequel le signal à spectre étalé est obtenu par le dispositif de transmission en effectuant une modulation à spectre étalé sur un signal avec une valeur d'amplitude constante en utilisant un mot de code spécifique ;
>
> désétaler, par le dispositif de réception, le signal à spectre étalé reçu en utilisant le mot de code spécifique dont la valeur de phase est synchronisée avec la valeur de phase du signal à spectre étalé reçu, et déterminer une différence d'amplitude entre une valeur d'amplitude d'un signal désétalé et la valeur d'amplitude maximale correspondant au mot de code spécifique ;
>
> déterminer, par le dispositif de réception, une valeur de gigue de phase en utilisant la différence d'amplitude ; et
>
> éliminer, par le dispositif de réception, la valeur de gigue de phase.

7. Procédé selon l'une quelconque des revendications 1 à 6, dans lequel l'exécution, par le dispositif de réception, d'un traitement de synchronisation entre la valeur de phase du mot de code spécifique ajusté en phase et la valeur de phase du signal à spectre étalé reçu en utilisant la première différence de phase comprend de :

déterminer, par le dispositif de réception, un coefficient d'annulation de diaphonie en fonction de la première différence de phase ; et effectuer, par le dispositif de réception, une annulation de diaphonie sur le signal à spectre étalé reçu en utilisant le coefficient d'annulation de diaphonie.

8. Appareil pour la synchronisation de phase, dans lequel l'appareil comprend :

une unité de réception (61) configurée pour recevoir un signal à spectre étalé transmis par un dispositif de transmission, dans lequel le signal à spectre étalé est obtenu par le dispositif de transmission en effectuant une modulation à spectre étalé sur un signal avec une valeur d'amplitude constante en utilisant un mot de code spécifique ;
une unité de désétalement (62) configurée pour désétaler le signal à spectre étalé reçu en utilisant le mot de code spécifique, pour obtenir un premier signal désétalé, dans lequel une valeur d'amplitude du premier signal désétalé est une première valeur d'amplitude ;
une unité d'ajustement (63) configurée pour ajuster une valeur de phase du mot de code spécifique, et désétaler le signal reçu à spectre étalé en utilisant le mot de code spécifique ajusté en phase, pour obtenir un second signal désétalé, dans lequel une valeur d'amplitude du second signal désétalé est une seconde valeur d'amplitude ;
une unité de détermination (64) configurée pour déterminer une première différence de phase en fonction d'une différence entre la première valeur d'amplitude et la seconde valeur d'amplitude, dans lequel la première différence de phase est une différence entre une valeur de phase du mot de code spécifique ajusté en phase et une valeur de phase du signal à spectre étalé reçu ; et
une unité de synchronisation (65) configurée pour effectuer un traitement de synchronisation entre la valeur de phase du mot de code spécifique ajusté en phase et la valeur de phase du signal à spectre étalé reçu en utilisant la première différence de phase ;
**caractérisé en ce que**
l'unité de synchronisation est configurée pour :
transmettre la première différence de phase au dispositif de transmission, et ordonner au dispositif de transmission d'ajouter la première différence de phase à la valeur de phase du signal à spectre étalé transmis.

9. Appareil selon la revendication 8, dans lequel l'unité de détermination est configurée pour : si la différence entre la première valeur d'amplitude et la seconde valeur d'amplitude est 0, déterminer que la première différence de phase est égale à 0.

10. Appareil selon la revendication 8, dans lequel la différence entre la première valeur d'amplitude et la seconde valeur d'amplitude n'est pas 0 ;
l'unité d'ajustement est en outre configurée pour : réajuster la valeur de phase du mot de code spécifique ajusté en phase, et désétaler le signal à spectre étalé reçu en utilisant le mot de code spécifique réajusté en phase, pour obtenir un troisième signal désétalé, dans lequel une valeur d'amplitude du troisième signal désétalé est une troisième valeur d'amplitude ; et
l'unité de détermination est configurée pour :
utiliser la différence entre la première valeur d'amplitude et la seconde valeur d'amplitude en tant que première différence d'amplitude, utiliser une différence entre la troisième valeur d'amplitude et la seconde valeur d'amplitude en tant que seconde différence d'amplitude, et déterminer la première différence de phase en fonction de la première différence d'amplitude et de la seconde différence d'amplitude.

11. Appareil selon la revendication 10, dans lequel l'unité de détermination est configurée pour :

si la première différence d'amplitude n'est pas égale à la seconde différence d'amplitude, ou si la première différence d'amplitude est égale à la seconde différence d'amplitude et la seconde différence d'amplitude est inférieure à 0, déterminer que la première différence de phase est conforme la formule suivante :

$$\left( \frac{A_2}{A_{max}} - 1 \right) * p \quad ;$$

ou
si la première différence d'amplitude est égale à la seconde différence d'amplitude et la seconde différence d'amplitude est supérieure à 0, déterminer que la première différence de phase est conforme à la formule suivante :

$$\left( 1 - \frac{A_2}{A_{max}} \right) * p \quad ,$$

où $A_{max}$ indique une valeur d'amplitude maximale correspondant au mot de code spécifique, P indique une largeur d'élément du mot de code spécifique, et $A_2$ indique la troisième valeur d'amplitude.

12. Appareil selon la revendication 11, dans lequel la valeur d'amplitude maximale $A_{max}$ correspondant au mot de code spécifique est conforme à la formule

suivante : $$A_{max} = \Delta A * \frac{p}{abs(\Delta p)}$$ où

$abs(\Delta p)$ indique une valeur absolue de l'ajustement de phase, et $\Delta A$ indique une variation d'amplitude correspondant à la différence de phase spécifique.

13. Appareil selon l'une quelconque des revendications 8 à 12, dans lequel l'unité de réception est en outre configurée pour recevoir un signal à spectre étalé transmis par le dispositif de transmission, dans lequel le signal à spectre étalé est obtenu par le dispositif de transmission en effectuant une modulation à spectre étalé sur un signal avec une valeur d'amplitude constante en utilisant un mot de code spécifique ;
l'unité de désétalement est configurée pour désétaler le signal à spectre étalé reçu en utilisant le mot de code spécifique dont la valeur de phase est synchronisée avec la valeur de phase du signal à spectre étalé reçu, et déterminer une différence d'amplitude entre une valeur d'amplitude d'un signal désétalé et la valeur d'amplitude maximale correspondant au mot de code spécifique ;
l'unité de détermination est configurée pour déterminer une valeur de gigue de phase en utilisant la différence d'amplitude ; et
l'unité de synchronisation est configurée pour éliminer la valeur de gigue de phase.

FIG. 1

FIG. 2

A receiving device receives a spread spectrum signal transmitted by a transmitting device, where the spread spectrum signal is obtained by the transmitting device by performing spread spectrum modulation on a signal with a constant amplitude value by using a specific code word — 31

The receiving device despreads the received spread spectrum signal by using the specific code word, to obtain a first despread signal, where an amplitude value of the first despread signal is a first amplitude value — 32

The receiving device adjusts a phase value of the specific code word, and despreads the received spread spectrum signal by using the phase-adjusted specific code word, to obtain a second despread signal, where an amplitude value of the second despread signal is a second amplitude value — 33

The receiving device determines a first phase difference according to a difference between the first amplitude value and the second amplitude value, where the first phase difference is a difference between a phase value of the phase-adjusted specific code word and a phase value of the received spread spectrum signal — 34

The receiving device performs synchronization processing between the phase value of the phase-adjusted specific code word and the phase value of the received spread spectrum signal by using the first phase difference — 35

FIG. 3

The receiving device receives a spread spectrum signal transmitted by the transmitting device, where the spread spectrum signal is obtained by the transmitting device by performing spread spectrum modulation on a signal with a constant amplitude value by using a specific code word

41

The receiving device despreads the received spread spectrum signal by using the specific code word whose phase value is synchronized with the phase value of the received spread spectrum signal, and determines an amplitude difference between an amplitude value of a despread signal and the maximum amplitude value corresponding to the specific code word

42

The receiving device determines a phase jitter value by using the amplitude difference

43

The receiving device eliminates the phase jitter value

44

FIG. 4

A receiving device receives a spread spectrum signal transmitted by a transmitting device, where the spread spectrum signal is obtained by the transmitting device by performing spread spectrum modulation on a signal with a constant amplitude value by using a specific code word — 31

The receiving device despreads the received spread spectrum signal by using the specific code word, to obtain a first despread signal, where an amplitude value of the first despread signal is a first amplitude value — 32

The receiving device adjusts a phase value of the specific code word, and despreads the received spread spectrum signal by using the phase-adjusted specific code word, to obtain a second despread signal, where an amplitude value of the second despread signal is a second amplitude value — 33

The receiving device determines a first phase difference according to a difference between the first amplitude value and the second amplitude value, where the first phase difference is a difference between a phase value of the phase-adjusted specific code word and a phase value of the received spread spectrum signal — 34

The receiving device determines a crosstalk cancellation coefficient according to the first phase difference — 51

The receiving device performs crosstalk cancellation on the received spread spectrum signal by using the crosstalk cancellation coefficient — 52

FIG. 5

61      62      63      64      65

| Receiving unit | → | Despreading unit | → | Adjusting unit | → | Determining unit | → | Synchronization unit |
|---|---|---|---|---|---|---|---|---|

**FIG. 6**

72            74

| Processor | | Memory |

700

75      71

| Bus interface | ↔ | Receiver |
| | ↔ | Transmitter |

73

76      User interface

**FIG. 7**

81　　　　82　　　　83　　　　84　　　　85

| Receiving unit | → | Despreading unit | → | Adjusting unit | → | Determining unit | → | Synchronization unit |
|---|---|---|---|---|---|---|---|---|

FIG. 8

92                    94

| Processor |        | Memory |

900

95

| Bus interface | ↔ | Receiver | 91 |

| | ↔ | Transmitter | 93 |

96

| User interface |

FIG. 9

101 102 103 104

Receiving unit → Despreading unit → Determining unit → Synchronization unit

FIG. 10

111 112 113 114

Receiving unit → Despreading unit → Determining unit → Synchronization unit

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1075089 A

- US 20140086282 A